# DEMANDE DE BREVET EUROPEEN

(11) **EP 2 779 364 A1**
(43) Date de publication de la demande: **17.09.2014**
(21) Numéro de dépôt: 13159267.7
(22) Date de dépôt: 14.03.2013
(51) Int. Cl.: H02K 1/27, H02K 5/15, H02K 5/16, H02K 1/18

(54) **Moteur électronique ayant un rotor à aimant permanent**

(71) Demandeur: Selni, 58000 Nevers (FR)
(72) Inventeur: Flocco, Bruno, 60300 Senlis (FR); Vidal, Philippe, 03340 Neuilly le Real (FR)
(74) Mandataire: Cabinet Laurent & Charras

(57) **Abrégé**

Le moteur électrique comportant un rotor (1) constitué d'un aimant permanent s'étendant à travers un stator (3) portant une pluralité de bobines (4) dans une culasse (7). Le rotor (1) est constitué d'un cylindre en plasto-ferrite aimanté (2), emmanché et collé sur un arbre (5), ledit cylindre (2) s'étendant entre deux paliers (6) solidaires dudit arbre (5). Les bobines (4) du stator (3) sont placées à l'intérieure de la culasse (7) dont chaque extrémité axiale est apte à recevoir une armature (8) qui comporte dans sa partie centrale un logement cylindrique (9) apte à recevoir un palier (6) et qui a des bras radiaux (10) s'étendant depuis le logement cylindrique (9) jusqu'à un cadre (11). Le cadre (11) a la forme extérieure semblable au pourtour de la culasse (7) et est fixé à la culasse (7).

## Description

### DOMAINE TECHNIQUE

La présente invention concerne un moteur à aimant permanent particulièrement destiné aux machines à laver, aux outils électroportatifs tels que les outils perceuses électriques, les ponceuses électriques, etc..., aux ventilateurs ou tout autre dispositif nécessitant un moteur électrique.

### ART ANTERIEUR

Dans le domaine de l'électroménager et de l'outillage électroportatif de faible puissance, c'est-à-dire pour des appareils d'une puissance inférieure à environ 1,2 kW, il est bien connu d'utiliser des moteurs électriques dits universels. Ces moteurs électriques universels comportent un rotor connecté en série avec l'enroulement inducteur et fonctionnent sur le même principe qu'une machine à courant continu à excitation série. Usuellement, le stator et le rotor de ces moteurs électriques sont feuilletés pour limiter l'apparition des courants de Foucault.

Ce type de moteur est très largement utilisé dans l'industrie en raison de son coût particulièrement faible ; toutefois, il présente de nombreux inconvénients. Un premier inconvénient de ce type de moteur est le faible rendement, généralement compris entre 20 et 40%, qui se traduit par une forte consommation d'électricité. Par ailleurs, les balais alimentant le rotor s'use rapidement et ce type de moteur présente un niveau de bruyance élevé. Enfin, les ruptures de contact successives, propres au fonctionnement de l'ensemble balais-collecteur du moteur, génèrent des parasites dans le circuit d'alimentation et des interférences électromagnétiques.

Afin de remédier à ces inconvénients, il a déjà été imaginé des machines synchrone à aimants permanents dites moteurs électriques à aimants permanents. Ces moteurs électriques se composent d'un stator comportant un bobinage qui produit un champ magnétique tournant à la fréquence d'alimentation du bobinage et d'un rotor où le champ magnétique est produit par des aimants permanents. Lesdits aimants permanents se présentent sous la forme de barrettes sensiblement parallélépipédique et sont généralement collés au rotor au moyen d'une résine. Un tel montage d'aimants permanents sur un rotor est notamment décrit dans la demande de brevet américain US 2010/0066191.

Un tel moteur à aimants permanents est notamment décrit dans la demande de brevet français FR 2 884 366.

Ces moteurs à aimants permanents présentent un meilleur rendement que celui des moteurs universels, un rapport couple/masse et un rapport puissance/masse élevés et présentent l'avantage de ne pas s'user, ces moteurs ne comportant ni balais ni charbons contrairement aux moteurs universels, et de générer peu de bruit lors de leur utilisation.

Toutefois, ce type de moteur présente l'inconvénient d'être particulièrement onéreux. En effet, les aimants permanents utilisés consistent généralement dans des barrettes à base de néodyme de fer et de Bore. Le néodyme étant une terre rare dont le prix a fortement augmenté au cours des dernières années, le coût des aimants permanents et in fine des moteurs électriques ont également considérablement augmentés.

### EXPOSE DE L'INVENTION

L'un des buts de l'invention est donc de remédier à ces inconvénients en proposant un moteur électrique à aimant permanent de conception simple et peu onéreuse procurant une faible consommation d'énergie, présentant un faible niveau de bruit lors de son utilisation et limitant le risque de démagnétisation par la réaction d'induit.

A cet effet et conformément à l'invention, il est proposé un moteur électrique à aimants permanents comportant au moins un rotor constitué d'au moins un aimant permanent s'étendant à travers un stator portant une pluralité de bobines ; ledit moteur électrique est remarquable en ce que le rotor est constitué d'un cylindre en plastoferrite aimanté, emmanché et collé sur un arbre, ledit cylindre en plastoferrite s'étendant entre deux paliers solidaires dudit arbre, et en ce que les bobines sont solidaires de la paroi intérieure d'un carter dont les extrémités sont aptes à recevoir respectivement une armature comportant dans sa partie centrale un logement cylindrique apte à recevoir le palier et des bras radiaux s'étendant depuis le logement cylindrique jusqu'à un cadre de même forme que la section du carter, ledit cadre étant apte à coopérer avec ledit carter.

De préférence, le cylindre en plastoferrite présente une épaisseur comprise entre 0,1 et 0,2 fois la longueur dudit cylindre.

Par ailleurs, la paroi intérieure du cylindre en plastoferrite est collée sur la paroi extérieure d'un corps de base cylindrique, coaxial et solidaire de l'arbre du moteur.

Ledit cylindre en plastoferrite est collé sur l'arbre ou le corps de base cylindrique au moyen d'une colle cyanoacrylate.

De plus, le corps de base cylindrique présente des évidements longitudinaux uniformément répartis autour de son axe de rotation.

Avantageusement, la paroi externe du cylindre en plastoferrite comporte une ou plusieurs rainures annulaires et/ou au moins un creux.

Ledit carter présente une section transversale sensiblement carrée comportant à chacun de ses angles un trou traversant dans lequel est apte à s'étendre une vis coopérant avec un écrou, les cadres des armatures présentant une forme sensiblement carrée et comportant à chacun de ses angles un trou apte à recevoir ladite vis.

Par ailleurs, le moteur électrique suivant l'invention comporte une carte électronique de commande du moteur comprenant au moins un filtre de compatibilité électromagnétique dit CEM, un circuit de correction du facteur de puissance, un circuit de redressement et de filtrage, un circuit comportant des transistors bipolaires à grille isolée dits IGBT afin de fournir la tension d'alimentation au moteur électrique et un microcontrôleur apte à déterminer et transmettre les signaux de commande au circuit à transistors IGBT.

Ledit microcontrôleur comporte un programme à commande vectorielle qui est avantageusement basé sur un repère de référence lié au flux rotorique.

Selon une variante d'exécution, la carte électronique de commande du moteur comprend au moins un capteur apte à mesurer la position du rotor.

Ledit capteur consiste en un capteur à effet hall.

### DESCRIPTION SOMMAIRE DES FIGURES

D'autres avantages et caractéristiques ressortiront mieux de la description qui va suivre de plusieurs variantes d'exécution, données à titre d'exemple non limitatifs, du moteur électrique à aimants permanents conforme à l'invention, en référence aux dessins annexés sur lesquels :
- la figure 1 est une vue en perspective du moteur électrique à aimants permanents suivant l'invention,
- la figure 2 est une vue en perspective éclatée du moteur électrique à aimants permanents suivant l'invention,
- la figure 3 est une vue de côté éclatée du moteur électrique à aimants permanents suivant l'invention,
- la figure 4 est ne vue de côté du moteur électrique à aimants permanents suivant l'invention,
- la figure 5 est une vue de face du moteur électrique à aimants permanents suivant l'invention,

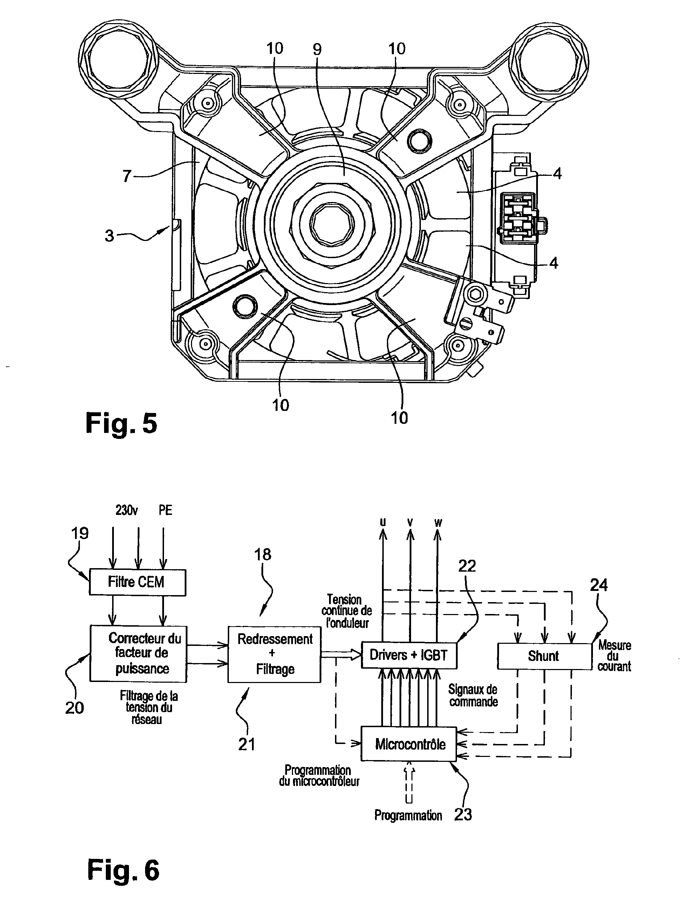

- la figure 5 est une représentation schématique de la carte électronique de commande du moteur électrique à aimants permanents suivant l'invention,
- la figure 6 est une représentation schématique du programme à commande vectorielle du microcontrôleur de la carte électronique de commande du moteur électrique à aimants permanents suivant l'invention,

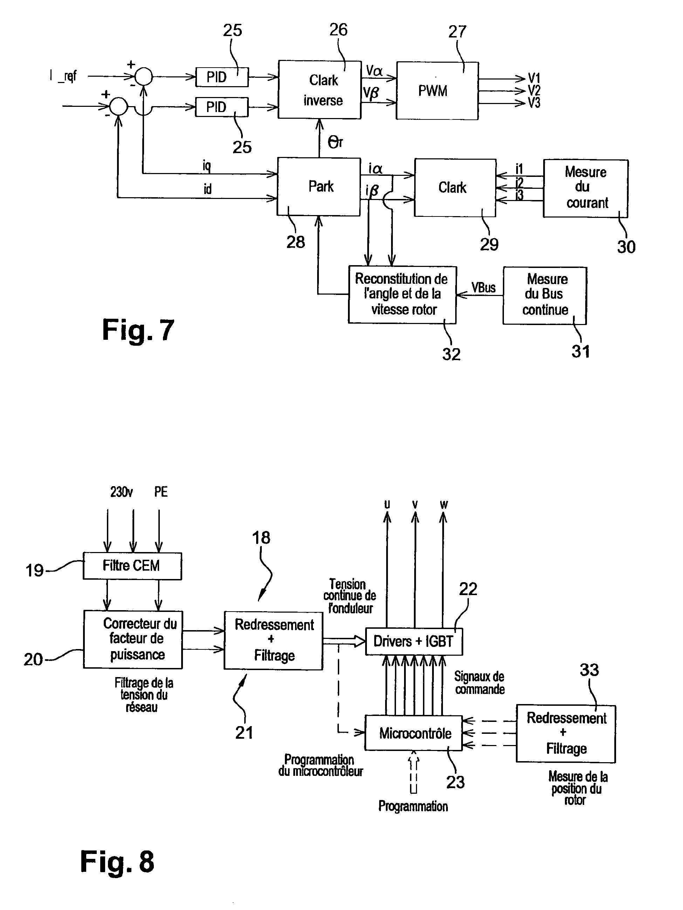

- la figure 7 est une représentation schématique d'une variante d'exécution de la carte électronique de commande du moteur électrique à aimants permanents suivant l'invention.

### DESCRIPTION DETAILLEE DE L'INVENTION

Dans la suite de la description du moteur électrique à aimants permanents suivant l'invention, les mêmes références numériques désignent les mêmes éléments. Les différentes vues ne sont pas nécessairement tracées à l'échelle. Par ailleurs, le moteur électrique à aimants permanents est particulièrement destiné aux appareils électroménagers et aux outils électroportatifs ; toutefois, il est bien évident que le moteur électrique à aimants permanents suivant l'invention pourra trouver de nombreuses applications notamment dans le domaine des automatismes sans pour autant sortir du cadre de l'invention.

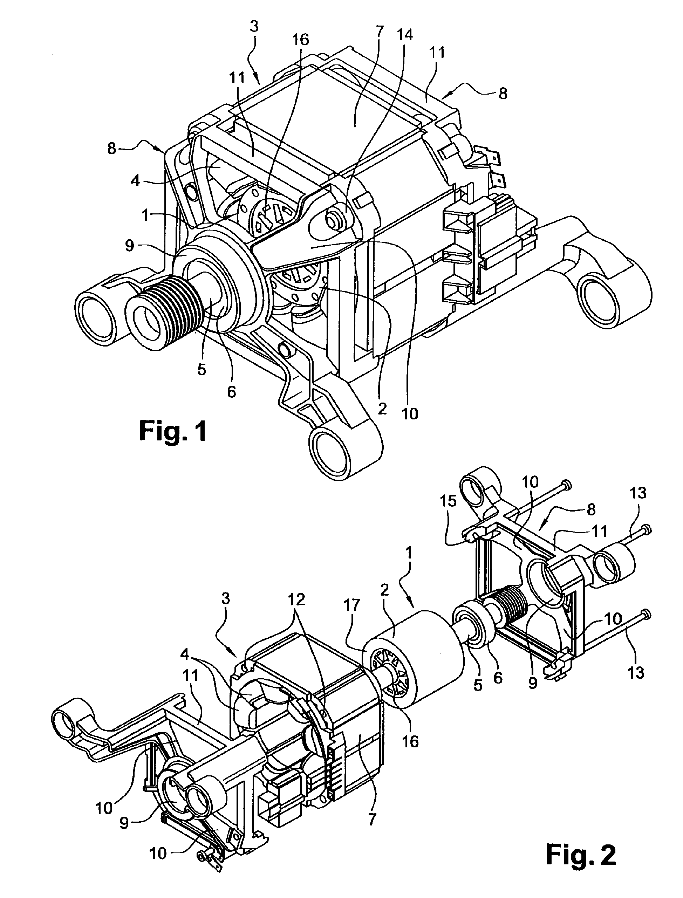

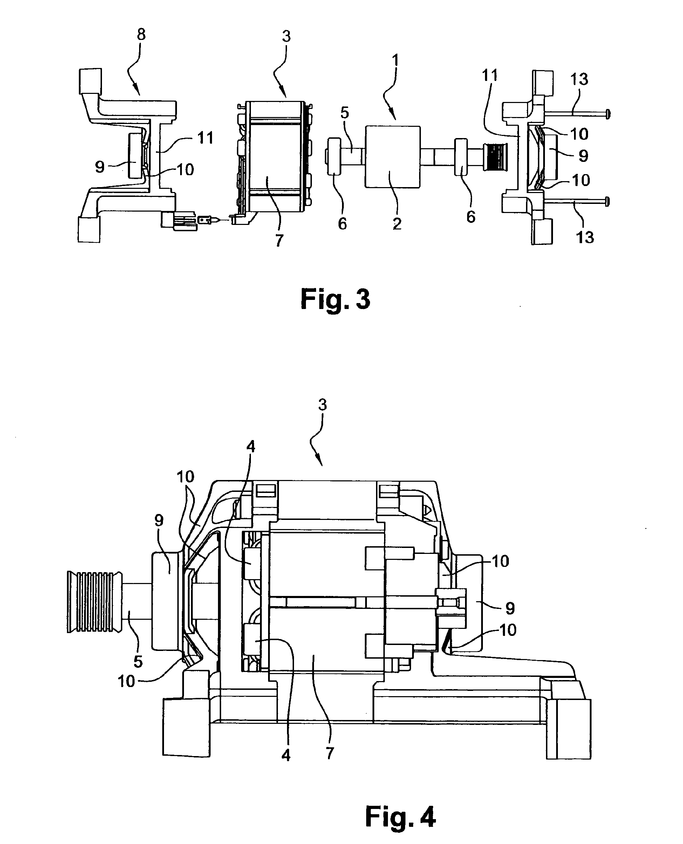

En référence aux figures 1 à 5, le moteur électrique à aimants permanents suivant l'invention est constitué d'un rotor (1) comprenant un aimant permanent en plastoferrite (2) s'étendant à travers un stator (3) portant une pluralité de bobines (4). Ledit rotor est constitué d'un cylindre en plastoferrite aimanté (2), emmanché et collé sur un arbre (5), ledit cylindre en plastoferrite (2) s'étendant entre deux paliers (6) solidaires dudit arbre (5). On entend par « plastoferrite » un matériau composé de poudre de ferrite mélangée à un liant thermoplastique. Il est bien évident que le cylindre en plastoferrite (2) suivant l'invention pourra être obtenu par tout procédé de moulage et/ou d'usinage d'un matériau plastoferrite bien connu de l'homme du métier.

Par ailleurs, les bobines (4) sont solidaires de la paroi intérieure d'un carter (7) dont les extrémités sont aptes à recevoir respectivement une armature (8). Chaque armature (8) comporte dans sa partie centrale un logement cylindrique (9) apte à recevoir un palier (6) et des bras radiaux (10) s'étendant depuis le logement cylindrique (9) jusqu'à un cadre (11) de même forme que la section du carter (7), ledit cadre (11) étant apte à coopérer avec ledit carter (7).

Dans cet exemple particulier de réalisation, ledit carter (7) présente une section transversale sensiblement carrée comportant à chacun de ses angles un trou traversant (12) dans lequel est apte à s'étendre une vis (13) coopérant avec un écrou (14), les cadres (11) des armatures (8) présentant une forme sensiblement carrée et comportant à chacun de ses angles un trou (15) apte à recevoir ladite vis (13). De plus, chaque armature (8) comporte quatre bras radiaux (10) s'étendant depuis le logement cylindrique (9) recevant le palier (6) jusqu'aux angles du cadre (11) carré.

De préférence, le cylindre en plastoferrite (2) présente une épaisseur comprise entre 0,1 et 0,2 fois la longueur dudit cylindre (2). Par ailleurs, la paroi intérieure du cylindre en plastoferrite (2) est collée sur la paroi extérieure d'un corps de base (16) cylindrique, coaxial et solidaire de l'arbre (5) du moteur. Ledit cylindre en plastoferrite (2) est collé sur le corps de base (16) cylindrique au moyen d'une colle cyanoacrylate bien connu de l'homme du métier.

Il est bien évident que la colle cyanoacrylate pourra être substituée par toute autre colle adaptée bien connue de l'homme du métier telle qu'une colle époxy par exemple sans pour autant sortir du cadre de l'invention.

De plus, en référence aux figures 1 et 2, le corps de base (16) cylindrique présente des évidements longitudinaux (17) uniformément répartis autour de son axe de rotation.

Avantageusement, la paroi externe du cylindre en plastoferrite (2) comporte une ou plusieurs rainures annulaires et/ou au moins un creux, non représentés sur les figures, afin d'assurer un parfait équilibrage du cylindre en plastoferrite (2) et éviter tout effort sur les paliers lors de la rotation dudit cylindre en plastoferrite (2) lors du fonctionnement du moteur.

Par ailleurs, en référence à la figure 6, le moteur électrique suivant l'invention comporte une carte électronique de commande (18) du moteur comprenant au moins un filtre de compatibilité électromagnétique dit CEM (19), un circuit de correction du facteur de puissance (20), un circuit de redressement et de filtrage (21), un circuit comportant des transistors bipolaires à grille isolée (22) dits IGBT selon l'acronyme anglo-saxon « Insulated Gate Bipolar Transistor » afin de fournir la tension d'alimentation au moteur électrique et un microcontrôleur (23) apte à déterminer et transmettre les signaux de commande au circuit à transistors IGBT (22). On notera que le filtre CEM (19) consiste dans un filtre permettant d'empêcher les courants induits sur les câbles de pénétrer dans la carte électronique et de perturber les fonctions qui s'y trouve. Ce filtre CEM (19) peut par exemple consister dans un filtrage fréquentiel et/ou un filtre temporel et/ou dans un écrêtage en tension ou dans tout autre filtre bien connu de l'homme du métier afin de supprimer les perturbations électromagnétiques en mode conduites et rayonnées. Le circuit correcteur du facteur de puissance (20) permet, de manière usuelle, d'éliminer les déformations du réseau électrique sur le courant absorbé pour éviter l'apparition de courants harmoniques polluant le réseau d'une part, et de mettre le courant et la tension en phase d'autre part. Le circuit de redressement de redressement et de filtrage (21) permet d'assurer la tension du bus continu.

Ledit circuit (18) comporte par ailleurs un shunt (24) consistant dans un ensemble de résistances de faibles valeurs pour mesurer les courants dans les phases du moteur. Ces mesures du courant dans les phases du moteur sont utiles pour assurer le contrôle du moteur au moyen du microcontrôleur (23) comme il sera détaillé un peu plus loin.

Ledit microcontrôleur (23) comporte un programme à commande vectorielle qui est avantageusement basé sur un repère de référence lié au flux rotorique, ce qui permet d'améliorer les performances du moteur en régime dynamique.

En référence à la figure 7, dans laquelle i₁,i₂,i₃ sont les courants traversant les phases du moteur, V_{bus} est la tension du bus continu, V₁, V₂, V₃ sont les tensions alimentant les phases du moteur, le programme à commande vectorielle comporte des correcteurs PID (25), c'est-à-dire des correcteurs proportionnels intégraux dérivés, une transformée de Clark inverse (26) et une modulation de largeur d'impulsion dite PWM (27) selon l'acronyme anglo-saxon «*Pulse Width Modulation*» pour déterminer les tensions V₁, V₂, V₃ alimentant les phases du moteur, une transformée de Park (28), une transformée de Clark (29) pour reconstituer, à partir des mesures du courant (30) au moyen du shunt (24), en référence à la figure 6, et des mesures du bus continu (31), l'angle et la vitesse du rotor (32). On notera que la vitesse du rotor est de préférence reconstituée à partir des courants mesurés et de la tension du bus continu au moyen d'un observateur non linéaire.

Ainsi, cette commande effectue des calculs d'un certain ensemble de grandeurs intermédiaires représentant des images de la projection du champ statorique suivant l'axe du champ rotorique (transformation de Clark) et suivant l'axe perpendiculaire du champ rotorique (transformation de Park). En décomposant le courant statorique dans le repère de Park en deux composantes, à savoir le courant i_{d} suivant le flux rotorique et le courant iq en quadrature avec le flux statorique, la commande du flux et la commande du couple sont découplées. De cette manière, il est possible d'assurer un contrôle précis de la position du champ magnétique statorique en régime transitoire et en régime statique en choisissant les paramètres idoines.

Selon une variante d'exécution de la carte électronique de commande (18) du moteur suivant l'invention, en référence à la figure 8, cette dernière comporte de la même manière que précédemment au moins un filtre de compatibilité électromagnétique dit CEM (19), un circuit de correction du facteur de puissance (20), un circuit de redressement et de filtrage (21), un circuit comportant des transistors bipolaires à grille isolée (22) dits IGBT selon l'acronyme anglo-saxon « Insulated Gate Bipolar Transistor » afin de fournir la tension d'alimentation au moteur électrique et un microcontrôleur (23) apte à déterminer et transmettre les signaux de commande au circuit à transistors IGBT (22). Cette carte électronique de commande (18) se distingue de la carte précédemment décrit par le fait que le shunt (24) a été substitué par trois capteurs à effet Hall (33) qui permettent de détecter à tout moment la position du rotor de telle manière que le microcontrôleur détermine l'alimentation des bobines statoriques et le champ magnétique dans les bobines. Les capteurs à effet Hall (33) détectent le passage d'un pôle magnétique et, à partir de cette information, le circuit de commande effectue la commutation des bobines.

Il va de soi que les trois capteurs à effet Hall (33) pourront être substitué par un unique capteur bien connu de l'Homme du métier sans pour autant sortir du cadre de l'invention.

De plus, on notera que le circuit de commande pourra consister dans un circuit de commande vectorielle ou dans tout autre circuit de commande bien connu de l'homme du métier tel qu'un circuit de commande classique fonctionnant suivant la méthode dites des six étapes.

Il est bien évident que les exemples que l'on vient de donner ne sont que des illustrations particulières et en aucun cas limitatif quant au domaine d'application de l'invention.

## Revendications

1. Moteur électrique à aimants permanents comportant au moins un rotor (1) constitué d'au moins un aimant permanent s'étendant à travers un stator (3) portant une pluralité de bobines (4) ***caractérisé* en ce que** le rotor (1) est constitué d'un cylindre en plastoferrite aimanté (2), emmanché et collé sur un arbre (5), ledit cylindre en plastoferrite (2) s'étendant entre deux paliers (6) solidaires dudit arbre (5), et **en ce que** les bobines (4) sont solidaires de la paroi intérieure d'un carter (7) dont les extrémités sont aptes à recevoir respectivement une armature (8) comportant dans sa partie centrale un logement cylindrique (9) apte à recevoir le palier (6) et des bras radiaux (10) s'étendant depuis le logement cylindrique (9) jusqu'à un cadre (11) de même forme que la section du carter (7), ledit cadre (11) étant apte à coopérer avec ledit carter (7).

2. Moteur électrique à aimant permanent suivant la revendication précédente ***caractérisé* en ce que** le cylindre en plastoferrite (2) présente une épaisseur comprise entre 0,1 et 0,2 fois la longueur dudit cylindre (2).

3. Moteur électrique à aimant permanent suivant l'une quelconque des revendications 1 ou 2 ***caractérisé* en ce que** la paroi intérieure du cylindre en plastoferrite (2) est collée sur la paroi extérieure d'un corps de base cylindrique (16), coaxial et solidaire de l'arbre (5) du moteur.

4. Moteur électrique à aimant permanent suivant l'une quelconque des revendications 1 à 3 ***caractérisé* en ce que** le cylindre en plastoferrite (2) est collé sur l'arbre (5) ou le corps de base cylindrique (16) au moyen d'une colle cyanoacrylate.

5. Moteur électrique à aimant permanent suivant la revendication 3 ***caractérisé* en ce que** le corps de base cylindrique (16) présente des évidement longitudinaux (17) uniformément répartis autour de son axe de rotation.

6. Moteur électrique à aimant permanent suivant l'une quelconque des revendications 1 à 5 ***caractérisé* en ce que** la paroi externe du cylindre en plastoferrite (2) comporte une ou plusieurs rainures annulaires.

7. Moteur électrique à aimant permanent suivant l'une quelconque des revendications 1 à 6 ***caractérisé* en ce que** la paroi externe du cylindre en plastoferrite (2) comporte au moins un creux.

8. Moteur électrique à aimant permanent suivant l'une quelconque des revendications 1 à 7 ***caractérisé* en ce que** le carter (7) présente une section transversale sensiblement carrée comportant à chacun de ses angles un trou traversant (12) dans lequel est apte à s'étendre une vis (13) coopérant avec un écrou (14), les cadres (11) des armatures (8) présentant une forme sensiblement carrée et comportant à chacun de ses angles un trou (15) apte à recevoir ladite vis (13).

9. Moteur électrique à aimant permanent suivant l'une quelconque des revendications 1 à 8 ***caractérisé* en ce qu'il** comporte une carte électronique de commande (18) du moteur comprenant au moins un filtre de compatibilité électromagnétique dit CEM (19), un circuit de correction du facteur de puissance (20), un circuit de redressement et de filtrage (21), un circuit comportant des transistors bipolaires à grille isolée dits IGBT (22) afin de fournir la tension d'alimentation au moteur électrique et un microcontrôleur (23) apte à déterminer et transmettre les signaux de commande au circuit à transistors IGBT (22).

10. Moteur électrique à aimant permanent suivant la revendication 9 ***caractérisé* en ce que** le microcontrôleur (23) comporte un programme à commande vectorielle.

11. Moteur électrique à aimant permanent suivant la revendication 10 ***caractérisé* en ce que** le programme à commande vectorielle est basé sur un repère de référence lié au flux rotorique.

12. Moteur électrique à aimant permanent suivant la revendication 9 ***caractérisé* en ce que** la carte électronique de commande (18) du moteur comprend au moins un capteur (33) apte à mesurer la position du rotor.

13. Moteur électrique à aimant permanent suivant la revendication 12 ***caractérisé* en ce que** ledit capteur (33) consiste en un capteur à effet Hall.
